# NEUE EUROPÄISCHE PATENTSCHRIFT

(11) **EP 2 573 058 B2**
(45) Veröffentlichungstag und Bekanntmachung des Hinweises auf die Entscheidung über den Einspruch: **02.07.2025**
(45) Hinweis auf die Patenterteilung: 21.12.2016
(21) Anmeldenummer: 11182167.4
(22) Anmeldetag: 21.09.2011
(51) Int. Cl.: C04B 18/02, C04B 32/00, C04B 35/043, C04B 35/057, C04B 35/06, C04B 35/66, C04B 35/626

(54) **Granulat enthaltend agglomeriertes Schüttgut**
Granulate containing agglomerated bulk material
Granulé contenant des produits en vrac agglomérés

(43) Veröffentlichungstag der Anmeldung: 27.03.2013
(73) Patentinhaber: Rheinkalk GmbH, 42489 Wülfrath (DE)
(72) Erfinder: Rückert, Wolfgang, 40476 Düsseldorf (DE)
(74) Vertreter: Cohausz & Florack

(56) Entgegenhaltungen:
- EP-A2- 1 659 190
- EP-B1- 1 540 023
- CN-Y- 201 024 183
- DE-A1- 1 955 869
- DE-A1- 2 163 203
- DE-A1- 2 255 234
- DE-B1- 1 583 969
- GB-A- 1 112 331
- GB-A- 1 450 385
- US-A- 4 039 320
- US-A- 4 462 823
- JOHAR ET AL.: "Microstructure characterizazion of Al/calcined Dolomite metal matrix composites", ICOSM2007, 2007, pages 124 - 128, XP002665375
- "Burnt Dolomite for Metallurgy", 1 September 2009 (2009-09-01), XP055113356, Retrieved from the Internet <URL:http://dolomitwerk-wuenschendorf.de/fileadmin/user_upload/englisch/Gebr._Dolomit_E_09-11-11.pdf> [retrieved on 20140410]
- PAULIE ANETTE: "Herstellung von Retardmatrixpellets durch Schmelzagglomerierung in der Wirbelschicht ", INTERNET CITATION, pages 1 - 2, XP093252938, Retrieved from the Internet <URL:https://docserv.uni-duesseldorf.de/servlets/DocumentServlet?id=3168>
- PARIKH, D. M.: "Handbook of Pharmaceutical Granulation Technology. 3rd ed.", 2010, INFORMA HEALTHCARE, New York, pages: 435 - 448, XP055420845
- SIVRIKAYA, O. ET AL.: "Use of Organic Binders and Borates in Pelletizing of Iron Oxides", IV. ULUSLARARASI BOR SEMPOZYUMU . IV INTERNATIONAL BORON SYMPOSIUM, vol. 15-17, October 2009 (2009-10-01), TURKEY, pages 251 - 256, XP055420839

## Beschreibung

Die vorliegende Erfindung betrifft ein Granulat zur Verwendung als Zusatzstoff in der Stahlherstellung und Feuerfest enthaltend mindestens ein agglomeriertes Schüttgut sowie eine Bindemittelmatrix. Die Erfindung betrifft ferner ein Verfahren zur Herstellung eines derartigen Granulates sowie seine Verwendung als Einsatzstoff in der Stahl- und Feuerfestindustrie.

Die Herstellung von Granulat aus Schüttgut mittels Agglomeration ist grundsätzlich bekannt. Durch Agglomerieren können die einzelnen Partikel des Schüttguts vergrößert werden wodurch die Partikelgrößenverteilung in einen gröberen Größenbereich verschoben wird.

Ein gängiges Granulierverfahren ist das Aufbaugranulieren auch Pelletieren genannt. Die Grenzflächenkräfte, die die Granulatpartikel zusammen halten, sind üblicherweise erhärtete Bindemittel, Kapillarkräfte, Molekularanziehung und/oder sich ineinander verhakende Bindungen bei zerklüfteter oder fasriger Oberfläche.

Insbesondere die Handhabung und Lagerung von Schüttgut kann durch Agglomeration erleichtert werden. Darüber hinaus können verschiedene Stoffeigenschaften wie beispielsweise die Rieselfähigkeit verbessert werden. Ferner kann bei pulverförmigen Stoffen eine Staubreduktion bewirkt werden.

Besonders vorteilhaft ist die Agglomeration von reaktivem Schüttgut, wie gebranntem Kalk oder Dolomit. Gebrannter Kalk reagiert heftig mit Wasser, was seine Handhabung und Lagerung erschwert. Durch Agglomeration kann die Partikeloberfläche des Kalks reduziert werden was seine Reaktionsfähigkeit verringert und seine Handhabung und Lagerung erleichtert.

Durch Agglomeration kann somit hochwertiger jedoch feinkörniger Kalk einer effizienten Nutzung zugeführt werden. Außerdem kann durch die Verwendung agglomerierter Produkte eine Staubentwicklung während des Einsatzes der Produkte reduziert werden, da feinkörnige Anteile im Agglomerat fest und stabil eingebunden werden können.

Bisher sind jedoch keine technisch und ökonomisch zufrieden stellenden Agglomerationsverfahren für reaktives Schüttgut bekannt. Dies liegt insbesondere daran, dass bisher kein für die Agglomeration von reaktivem Schüttgut geeignetes Bindemittel vorhanden ist.

In industriellen Prozessen wird bisher zur Agglomeration von Schüttgut im großen Maßstab Wasser eingesetzt. Wasser ist jedoch nicht zur Agglomeration von reaktivem Schüttgut geeignet, da es hier zu einer chemischen Reaktion kommt und die chemischen und physikalischen Eigenschaften des Schüttguts verändert werden. Hierdurch wird das Schüttgut für wesentliche Einsatzzwecke unbrauchbar gemacht.

Gebrannter Kalk setzt sich beispielsweise mit Wasser zu Kalkhydrat um. Kalkhydrat Ca(OH)₂ weist andere chemische und physikalische Eigenschaften als gebrannter Kalk CaO auf und ist für verschiedene Einsatzbereiche, wie beispielsweise die Stahlherstellung nicht geeignet, da auf der heißen Stahlschmelze das Kalkhydrat Ca(OH)₂ unter Wärmezufuhr in Kalk und Wasser aufgespalten wird. Hierdurch kommt es zu einem signifikanten Temperaturverlust der Schmelze, der u.a. für die Weiterverarbeitung im Strangguß und aufgrund eines größeren Energieaufwandes in der Stahlerzeugung nicht akzeptiert werden kann. Zusätzlich kommt es zu einer erheblichen Freisetzung von Wasserdampf, der an der heißen Stahlbadoberfläche in seine Elemente zersetzt werden kann. Aufgrund ihres niedrigen Hydrogenpartialdruckes nimmt die Metallschmelze Wasserstoff auf, der zu gravierenden Qualitätsmängeln im fertigen Produkt führen würde (v.a. Wasserstoffversprödung).

Alternativ werden in der Technik organische Bindemittel für Agglomerationsverfahren eingesetzt. Zur Agglomeration von reaktivem Schüttgut sind organische Bindemittel jedoch nicht geeignet, da sie sich nachteilig auf die weitere Verwendung der Agglomerate auswirken. So können sich zum Beispiel organische Bindemittel in Kontakt mit Kalk zersetzen. Zusätzlich ist das Ausgasen von organischen Bindemitteln gesundheitsschädigend für Personen, die mit dem Agglomerat in Kontakt kommen.

Ein weiterer Vorteil des erfindungsgemäßen Granulates besteht darin, dass es auch bei höheren Temperaturen seine Stabilität bewahrt. Salze weisen nämlich nur eine geringe Flüchtigkeit auf. Darüber hinaus kann durch die Verwendung von Salzen verhindert werden, dass das reaktive Schüttgut mit dem Bindemittel unerwünschte Mischphasen bildet und dadurch für seinen jeweiligen Einsatzzweck wichtige Eigenschaften verloren gehen.

Dies gilt insbesondere bei Verwendungen, bei denen das Agglomerat erhitzt wird, wie beispielsweise bei der Stahlherstellung. Darüber hinaus kann in der Stahlherstellung die Diffusion von Spaltprodukten des Bindemittels in die Stahlschmelze negative Auswirkungen auf die Produktqualität haben. Außerdem kann es bei höheren Temperaturen unter Verwendung von organischen Bindemitteln zu einem Zerfall des Agglomerats kommen, da das Bindemittel dann thermisch zersetzt wird.

Schließlich ist festzustellen, dass der Großteil der organischen Bindemittel weiterhin auf Wasser als Medium basiert, sei es als Suspension oder Lösung, was die Verwendung als Bindemittel für reaktive Schüttgüter aus obigen Betrachtungen unmöglich macht, da es zu einer Reaktion des reaktiven Schüttgutes mit dem Wasseranteil im Bindemittel kommt .

Die US 4 462 823 beschreibt einen Behandlungsstoff in Form von Granalien für Stahl, wobei die Granalien Magnesiumoxid und/oder -carbonat sowie ein Bindemittel ausgewählt aus Wasser, Bitumen, Stärke, Phenolformaldehydharz, Harnstoffformaldehydharz, Alkali- oder Erdalkalisilikate, Natriumchlorid oder kolloidalen Oxidhydraten enthalten.

Die GB 1 112 331 beschreibt ein Fließmittel für das Pulverschweißen von Eisen und Stahl, welches mit einem Bindemittel wie Chromtrioxid agglomerierten Materialien, darunter Schlackebildner und Fließmittel, enthält.

Die EP 1 659 190 A2 beschreibt einen Schlackekonditionierer enthaltend MgO, Kohlenstoff oder einen Füllstoff und ein Bindemittel wie Wasser oder ausgewählt aus der Gruppe bestehend aus Natriumsilicat, Ligosulfonat, Lignosulfonatlösungen, Salzsäure, Schwefelsäure, Magnesiumchlorid, Magnesiumsulfat, Melasse, Pech, Teer, Ashpalt, Bentonit, Tonen und Harzen.

Der Erfindung lag die Aufgabe zu Grunde, ein Granulat der Eingangs genannten Art bereit zu stellen, mit dem die Nachteile im Stand der Technik vermieden werden können. Bisher ist nur die Heißagglomeration von Kalk erfolgreich in der Praxis untersucht worden, hierbei waren aber hohe Temperaturen bis 900°C notwendig. Die Agglomeration mit Hilfe von Wasser als Bindemittel ist für kalkstämmige reaktive Schüttgüter unter Wahrung der chemischen Eigenschaften nicht möglich. Aufgrund der großen Vorteile von flüssigen Bindemitteln, unter anderem aufgrund der starken bindungsbildenden Wirkung von Kapillarkräften, wurde eine Agglomeration mit anderen Flüssigkeiten angedacht.

Diese Aufgabe wird erfindungsgemäß gelöst durch ein Granulat zur Verwendung als Zusatzstoff in der Stahlherstellung und Feuerfest enthaltend mindestens ein agglomeriertes reaktives Schüttgut sowie eine Bindemittelmatrix, wobei das Schüttgewicht im Bereich von 0,7 bis 1,2 liegt, wobei die Bindemittelmatrix mindestens ein organisches oder anorganisches Salz als Bindemittel enthält, wobei der Schmelzpunkt des Bindemittels im Bereich von 100°C bis unterhalb von 600°C liegt, wobei der Anteil an Schüttgut im Granulat im Bereich von 85 bis 99 % liegt und wobei das reaktive Schüttgut gebrannter Kalk CaO, gebrannter Dolomit MgO•CaO oder gebrannter Magnesit MgO oder Mischungen dieser Stoffe oder Mischungen mit den jeweiligen Karbonaten ist, herstellbar durch ein Verfahren umfassend folgende Schritte:
- Vermengen von reaktivem Schüttgut, Bindemittel sowie gegebenenfalls weiteren Hilfstoffen,
- Erhitzen des Gemenges auf eine Temperatur von mindestens der Schmelztemperatur des Bindemittels, so dass das Bindemittel zumindest teilweise schmilzt,
- Abkühlen des Gemenges unter Ausbildung des Granulats;
oder umfassend folgende Schritte:
- Erhitzen des Bindemittels auf eine Temperatur von mindestens der Schmelztemperatur des Bindemittels,
- Vermengen des zumindest teilweise geschmolzenem Bindemittel mit dem reaktivem Schüttgut, sowie gegebenenfalls weiteren Hilfstoffen,
- Abkühlen des Gemenges unter Ausbildung des Granulats.

Überraschend wurde gefunden, dass sich organische und anorganische Salze hervorragend als Bindemittel für die Agglomeration von reaktivem Schüttgut eignen. So können durch die Verwendung von organischen oder anorganischen Salzen als Bindemittel die feinkörnigen Anteile des reaktiven Schüttguts in der Bindemittelmatrix fest und stabil eingebunden werden.

Die Bindemittel verhalten sich im fertigen Produkt durchaus unterschiedlich. So kann es bei Verwendung von wasserfreiem Dibortrioxid (B₂O₃) sowohl zur Bildung von Mischkristallphasen als auch reiner Bindemittelphasen kommen. Bei Verwendung von wasserfreiem Calciumnitrat Ca(NO₃)₂ können die Teilchen in einer Bindermatrix eingeschlossen werden, bzw. der Binder kann bei anhaltender Wärmezufuhr unter Abspaltung von Stickoxiden NOx schließlich zu festem Kalk CaO zersetzt werden. Außerdem gibt es bei Verwendung von Calciumnitrat für kalkstämmige Schüttgüter Indizien für Löse- und Rekristallisationsprozesse von Kalk in der Schmelze, die eine bindungsbildende Rolle spielen können. Den Bindern ist jedoch gemeinsam, dass die Agglomeration über eine flüssige Phase des Bindemittels bewirkt werden kann.

Zusätzlich schirmt das Salz das reaktive Schüttgut hervorragend atmosphärisch ab, so dass das Granulat eine hohe Stabilität sowie hervorragende Handhabungs- und Lagerungseigenschaften aufweist.

Ein weiterer Vorteil des erfindungsgemäßen Granulats besteht darin, dass es temperaturstabil ist. Salze weisen nämlich nur eine geringe Flüchtigkeit auf. Darüber hinaus kann durch die Verwendung von Salzen verhindert werden, dass das reaktive Schüttgut mit dem Bindemittel reagiert und dadurch für seinen jeweiligen Einsatzzweck wichtige Eigenschaften verloren gehen.

Gemäß einer besonders bevorzugten Ausführungsform der Erfindung liegt der Schmelzpunkt des Bindemittels niedriger als der Schmelzpunkt des reaktiven Schüttguts. Dies hat den Vorteil, dass das Granulat auf einfache Weise durch Erhitzen eines Gemenges aus Schüttgut und Bindemittelmatrix hergestellt werden kann. In dieser Ausführungsform kann das reaktive Schüttgut äußerst homogen in der flüssigen Bindemittelmatrix verteilt und ein besonders homogenes und stabiles Granulat erhalten werden.

Alternativ kann das Granulat auch durch Aufschmelzen des Salzes und Verteilung der Schmelze in ein Schüttgutbett erzeugt werden. Vorteile dieser Technik sind die vielfältigen Möglichkeiten des Aufbringens der Salzschmelze bei dieser Vorgehensweise, zum Beispiel thermisches Spritzen oder Verdüsen einer Schmelze auf ein bewegtes Schüttgutbett. Das Schüttgutbett kann als thermische Isolation zur Umgebung dienen, insbesondere von Maschinenteilen. Die Energiekosten bei dieser Vorgehensweise sind besonders günstig. Allerdings kann der Bindemittelanteil signifikant steigen, falls die Schüttguttemperatur zu niedrig angesetzt wird.

Durch das Aufschmelzen entfaltet das Bindemittel seine Bindewirkung und bindet beispielsweise durch Adhäsions- bzw. Kapillarkräfte an das Schüttgut. Hierbei entsteht das erfindungsgemäße Granulat. Durch Absenken der Temperatur nach dem Agglomerationsvorgang kann ein dauerhaftes Einbinden des Schüttguts in die feste Bindemittelmatrix bewirkt werden.

Ein weiterer Vorteil niedrig schmelzender Salze bei der Herstellung des erfindungsgemäßen Granulats liegt in ihren günstigen thermodynamischen Eigenschaften. So können bei der Verwendung niedrig schmelzender Salze die Brennstoff- und Energiekosten bei der Agglomeration gering gehalten werden. Aus diesem Grund liegt der Schmelzpunkt des Bindemittels erfindungsgemäß unterhalb von 600°C, nämlich im Bereich von 100°C bis 600°C.

Besonders geeignet sind Bindemittel, die im Hinblick auf den Einsatzzweck des agglomerierten Schüttguts einen Mehrnutzen bringen. So kann beispielsweise eine chemische Reaktion zwischen Bindemittel und Schüttgut während des Agglomerationsvorgangs einen Mehrnutzen bringen, indem das Agglomerat eine besondere Festigkeit und/oder chemische Eigenschaften mit besonderem Mehrwert oder mit geringem Einfluss auf den Einsatzzweck aufweist.

Als erfindungsgemäß besonders zweckmäßig hat sich erwiesen, wenn Bindemittel eingesetzt werden, die mit dem reaktiven Schüttgut während des Agglomerationsvorgangs kovalente Bindungen und/oder ionische Mischkristalle ausbilden.

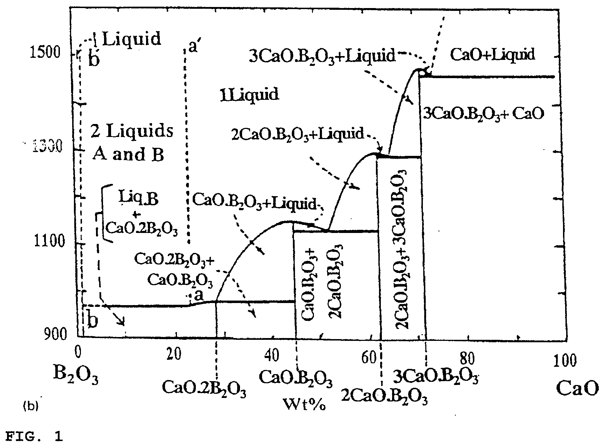

Wie in Figur 1 ersichtlich, ist zum Beispiel unter Verwendung von Dibortrioxid B₂O₃ die Ausbildung von Mischkristallphasen möglich. Die niedrig schmelzenden Mischphasen (CaO.2B₂O₃) können einen wichtigen Beitrag zur zusätzlichen Verfestigung leisten.

Ebenfalls hierin beschrieben sind ionische Flüssigkeiten. Diese enthalten ausschließlich Ionen. Es handelt sich somit um flüssige Salze, ohne dass das Salz in einem Medium wie Wasser gelöst ist. Früher waren heiße Salzschmelzen (bei Kochsalz über 800 °C) die einzigen bekannten Beispiele für derartige Flüssigkeiten. Heute versteht man unter ionischen Flüssigkeiten Salze, die bei Temperaturen unter 100°C flüssig sind. Beispiele für verwendete Kationen, die insbesondere alkyliert sein können: Imidazolium, Pyridinium, Pyrrolidinium, Guanidinium, Uronium, Thiouronium, Piperidinium, Morpholinium, Ammonium und Phosphonium.

Als Anionen kommen Halogenide und komplexere Ionen, wie Tetrafluoroborate, Trifluoracetate, Triflate, Hexafluorophosphate Phosphinate und Tosylate in Frage. Auch organische Ionen, wie beispielsweise Imide und Amide, können Anionen sein.

Die Größe und die Symmetrie der beteiligten Ionen behindert die Bildung eines starken Kristallgitters. Bereits geringe thermische Energie genügt daher, um die Gitterenergie zu überwinden und die feste Kristallstruktur aufzubrechen. Da die ionischen Flüssigkeiten kein Wasser enthalten, wird das reaktive Schüttgut nicht hydratisiert. Durch das Erwärmen der ionischen Flüssigkeit und Nutzung als flüssiges Bindemittel im Schüttgut wird eine Kapillarkraft induzierte Bindung geschaffen. Beim Erkalten und Aushärten der ionischen Flüssigkeit wird diese dauerhaft fest. Der Prozess läuft in dieser Art bei Salzschmelzen ab, das Temperaturniveau ist allerdings höher. Die Schmelztemperatur liegt bei ionischen Flüssigkeiten bedeutend unter der Schmelztemperatur von Salzen. Die Verwendung von ionischen Flüssigkeiten würde somit zu bedeutenden Energieeinsparungen führen.

Als reaktives Schüttgut wird erfindungsgemäß gebrannter Kalk CaO, gebrannter Dolomit MgO•CaO oder gebrannter Magnesit MgO oder Mischungen dieser Stoffe oder Mischungen mit den jeweiligen Karbonaten oder anderen Einsatzstoffen. Unter reaktivem Schüttgut im Sinne der Erfindung wird ein Schüttgut verstanden, das mit gängigen Agglomerationsmitteln, insbesondere Wasser und/oder organischen Lösungsmitteln, insbesondere Melasse oder mineralischen oder pflanzlichen Ölen, eine chemische und/oder physikalische Reaktion eingeht. Insbesondere existieren Bindemittel, die vom reaktiven Schüttgut katalytisch zersetzt werden, wie zum Beispiel mineralische und pflanzliche Öle.

Erfindungsgemäß wird ein reaktives kalkstämmiges Material, nämlich gebrannter Kalk CaO, gebrannter Dolomit MgO•CaO oder gebrannter Magnesit MgO oder Mischungen dieser Stoffe oder Mischungen mit den jeweiligen Karbonaten oder anderen Einsatzstoffen als Schüttgut eingesetzt. Granulate aus gebranntem Kalk sind technisch, zum Beispiel in der Stahlerzeugung oder der Feuerfestindustrie, besonders wertvoll, da sie verglichen mit pulverförmigem gebranntem Kalk verbesserte Handhabungs- und Lagerungseigenschaften aufweisen.

Gebrannter Kalk ist ein sehr reaktives Schüttgut, das in Verbindung mit Wasser heftig reagiert und hierdurch seine vorteilhaften Eigenschaften, zum Beispiel in der Stahlerzeugung verliert. Durch den erfindungsgemäßen Einsatz von Salz bei der Agglomeration von gebranntem Kalk kann dies verhindert und ein stabiles Agglomerat erhalten werden.

Soll das erfindungsgemäße Granulat im Stahlerzeugungsprozess eingesetzt werden, so ist es vorteilhaft wenn das Bindemittel aus chemischen Elementen besteht, die keine oder eine positive Auswirkung auf den Stahlerzeugungsprozess haben.

Demzufolge ist es erfindungsgemäß bevorzugt, wenn das Bindemittel eines oder mehrere der folgenden Elemente enthält: Natrium, Bor, Aluminium, Eisen, Fluor, Stickstoff, Kohlenstoff, Sauerstoff.

Erfindungsgemäß besonders geeignet ist die Verwendung von einem oder mehreren der folgenden Salzen als Bindemittel: Calciumnitrat, Eisenfluorid, Natriumfluorid, Kryolith.

Die Korngröße des Schüttguts im erfindungsgemäßen Granulat kann in weiten Bereichen schwanken. Praktische Versuche haben ergeben, dass Granulate mit besonders guten Eigenschaften erhalten werden, wenn das Schüttgut im Granulat eine mittlere Korngröße von 0-100 µm und/oder einen D50-Wert von 40 bis 60 µm aufweist.

Auch die Korngröße des Granulats kann in weiten Bereichen variieren. Zweckmäßiger Weise bewegt sich die Korngröße des Granulats im Bereich von 1 bis 6 mm oder darüber.

Der Anteil an Schüttgut im Granulat liegt im Bereich von 85 bis 99 %. Je größer der Anteil an Schüttgut Im Granulat, desto größer ist der Anteil an Wirksubstanz im Granulat. Je höher der Anteil an Bindemittel, desto sicherer erfolgt die Einbindung des Schüttguts in der Bindemittelmatrix und desto höher ist die Stabilität des Granulats. Praktische Versuche haben ergeben, dass besonders gute Ergebnisse erzielt werden, wenn das Verhältnis zwischen Schüttgut und Bindemittel sich im Bereich von 5:1 bis 100:1 bewegt.

Das Schüttgewicht des Granulats variiert in Abhängigkeit von der Art des Schüttguts, der Art des Bindemittels sowie der jeweiligen Mengenverhältnisse der einzelnen Komponenten des Granulats.

Erfindungsgemäß liegt das Schüttgewicht im Bereich von 0,7 bis 1,2. Wird als Schüttgut gebrannter Kalk und/oder Dolomit eingesetzt, so haben sich insbesondere im Hinblick auf einen Einsatz des Granulates in der Feuerfest- und Stahlindustrie Schüttgewichte im Bereich von 0,9 bis 1,1 als zweckmäßig erwiesen.

Ein weiterer Gegenstand der vorliegenden Erfindung ist ein Verfahren zur Herstellung eines Granulats zur Verwendung als Zusatzstoff in der Stahlherstellung und Feuerfest enthaltend mindestens ein agglomeriertes reaktives Schüttgut sowie eine Bindemittelmatrix, wobei das Schüttgewicht im Bereich von 0,7 bis 1,2 liegt, wobei die Bindemittelmatrix mindestens ein organisches oder anorganisches Salz als Bindemittel enthält, wobei der Schmelzpunkt des Bindemittels im Bereich von 100°C bis 600°C liegt, wobei der Anteil an Schüttgut im Granulat im Bereich von 85 bis 99 % liegt und wobei das reaktive Schüttgut gebrannter Kalk CaO, gebrannter Dolomit MgO•CaO oder gebrannter Magnesit MgO oder Mischungen dieser Stoffe oder Mischungen mit den jeweiligen Karbonaten ist, umfassend folgende Schritte:
- Vermengen von reaktivem Schüttgut, Bindemittel sowie gegebenenfalls weiteren Hilfstoffen,
- Erhitzen des Gemenges auf eine Temperatur von mindestens der Schmelztemperatur des Bindemittels, so dass das Bindemittel zumindest teilweise schmilzt,
- Abkühlen des Gemenges unter Ausbildung des Granulats;
oder umfassend folgende Schritte:
- Erhitzen des Bindemittels auf eine Temperatur von mindestens der Schmelztemperatur des Bindemittels,
- Vermengen des zumindest teilweise geschmolzenem Bindemittel mit dem reaktivem Schüttgut, sowie gegebenenfalls weiteren Hilfstoffen,
- Abkühlen des Gemenges unter Ausbildung des Granulats.

Vorteilhaft an einem Verfahren gemäß der Verfahrensvariante A, in der zunächst reaktives Schüttgut, Bindemittel sowie gegebenenfalls weitere Hilfsstoffe vermengt werden und anschließend ein Erhitzen des Gemenges stattfindet, ist, dass eine sehr homogene Mischung erzielt werden kann unter Einsatz der minimalen Bindemittelmenge.

Vorteilhaft an Verfahrensvariante B ist, dass der Energieverbrauch gegenüber Variante B reduziert werden kann, da das Schüttgut eine Temperatur unterhalb der Temperatur des Schüttgutes haben kann.

Das Vermengen von reaktivem Schüttgut, Bindemittel sowie gegebenenfalls weiteren Hilfsstoffen in Verfahrensvariante A wird vorteilhafterweise wie folgt durchgeführt:
1. Abwägen der Komponenten des Fertigproduktes
2. Homogenisieren der Komponenten in einem geeigneten Mischaggregat, zum Beispiel Luftmischer oder horizontalachsiger oder vertikalachsiger Schüttgutmischer.
3. Erwärmen des losen Gemenges in einem Ofen, zum Beispiel einem Kammerofen, eventuell unter weiterer Agitation. Alternativ kann das homogenisierte Ausgangsstoffgemisch brikettiert und dann erwärmt werden.

Das Erhitzen des Gemenges auf eine Temperatur von mindestens der Schmelztemperatur des Bindemittels in Verfahrensvariante A wird vorteilhafterweise wie folgt durchgeführt:
Das Gemenge wird brikettiert oder lose in einen geeigneten Ofen, etwa einen Kammerofen eingebracht. Der Ofen wird mit einem geeigneten Brennstoff oder induktiv auf die erforderliche Arbeitstemperatur gebracht bzw. wird die Temperatur im Ofen während des möglicherweise diskontinuierlichen Prozesses gehalten. Nach einer geeigneten Verweildauer wird das lose Fertiggut dem Ofen entnommen und gekühlt und gebrochen bzw. noch im warmen Zustand so bewegt, dass sich Agglomerate ausbilden, etwa durch einen Rührer. Das brikettierte Gemenge kann direkt gekühlt werden. Besonders vorteilhaft ist die Verwendung eines indirekt geheizten Drehrohrofens, in dem das lose oder brikettierte Gemenge unter Bewegung kontinuierlich zudosiert und erwärmt wird. Durch die Drehbewegung des Ofens bilden sich Agglomerate aus, die anschließend gekühlt werden.

Das Erhitzen des Bindemittels auf eine Temperatur von mindestens der Schmelztemperatur des Bindemittels in Verfahrensvariante B wird vorteilhafterweise wie folgt durchgeführt: Zuführung des Bindemittels in einen feuerfesten Behälter, etwa Graphittiegel oder Hochtemperatur beständige Metalle, anschließend indirektes Erhitzen des Bindemittels in einem geeigneten Ofen.

Das Abkühlen des Gemenges unter Ausbildung des Granulats in Verfahrensvariante A/B erfolgt am Einfachsten selbsttätig.

Im Folgenden wird die Erfindung anhand eines illustrativen Beispiels näher beschrieben:

### Beispiel (Illustration): Herstellung eines erfindungsgemäßen Granulats

1. Es werden 62g Borsäure durch Erhitzen entwässert und geschmolzen. Man erhält ca. 26g Bortrioxid. Das Bortrioxid wird gekühlt und vermahlen. Das Pulver wird mit 150g Feinkalk vermengt und zu einem festen Körper verpreßt. Der Körper wird für eine Minute auf eine Temperatur von mindestens 700°C erhitzt. Es wird ein Granulat hoher Festigkeit erhalten.
2. Es werden ca. 24 g Calciumnitrat Tetrahydrat durch Erhitzen entwässert und geschmolzen. Man erhält ca. 16g Calciumnitrat. Das geschmolzene Calciumnitrat wird auf ein erwärmtes Kalkbett gegeben und die Mischung bei ca. 700°C für zwei Minuten weiter erhitzt und mit einem feuerfesten Stäbchen gerührt. Man erhält Granulate hoher Festigkeit.

## Patentansprüche

1. Granulat zur Verwendung als Zusatzstoff in der Stahlherstellung und Feuerfest enthaltend mindestens ein agglomeriertes reaktives Schüttgut sowie eine Bindemittelmatrix, wobei das Schüttgewicht im Bereich von 0,7 bis 1,2 liegt, wobei die Bindemittelmatrix aus mindestens einem organischen oder anorganischen Salz als Bindemittel besteht, wobei der Schmelzpunkt des Bindemittels im Bereich von 100°C bis 600°C liegt,
wobei der Anteil an Schüttgut im Granulat im Bereich von 85 bis 99 % liegt
und wobei das reaktive Schüttgut gebrannter Kalk CaO, gebrannter Dolomit MgO•CaO oder gebrannter Magnesit MgO oder Mischungen dieser Stoffe oder Mischungen mit den jeweiligen Karbonaten ist,
herstellbar durch ein Verfahren umfassend folgende Schritte:
- Vermengen von reaktivem Schüttgut, Bindemittel sowie gegebenenfalls weiteren Hilfstoffen,
- Erhitzen des Gemenges auf eine Temperatur von mindestens der Schmelztemperatur des Bindemittels, so dass das Bindemittel zumindest teilweise schmilzt,
- Abkühlen des Gemenges unter Ausbildung des Granulats;
oder umfassend folgende Schritte:
- Erhitzen des Bindemittels auf eine Temperatur von mindestens der Schmelztemperatur des Bindemittels,
- Vermengen des zumindest teilweise geschmolzenem Bindemittel mit dem reaktivem Schüttgut, sowie gegebenenfalls weiteren Hilfstoffen,
- Abkühlen des Gemenges unter Ausbildung des Granulats.

2. Granulat nach Anspruch 1, **dadurch gekennzeichnet, dass** der Schmelzpunkt des Bindemittels niedriger liegt als der Schmelzpunkt des reaktiven Schüttguts.

3. Granulat nach einem der Ansprüche 1 bis 2, **dadurch gekennzeichnet, dass** das Bindemittel Natrium, Calcium, Bor, Aluminium, Eisen, Fluor, Stickstoff, Kohlenstoff und/oder Sauerstoff, vorzugsweise in Form chemischer Verbindungen, enthält.

4. Granulat nach einem der Ansprüche 1 bis 3, **dadurch gekennzeichnet, dass** das Schüttgut eine mittlere Korngröße von 0 bis 100 µm, und/oder einen d50- Wert von 40 bis 60 µm, aufweist.

5. Granulat nach einem der Ansprüche 1 bis 4, **dadurch gekennzeichnet, dass** das Granulat eine Korngröße von 1 bis 6 mm oder darüber hinaus, aufweist.

6. Granulat nach einem der Ansprüche 1 bis 5, **dadurch gekennzeichnet, dass** der Anteil an Bindemittel im Granulat im Bereich von 1 bis 15 % liegt.

7. Granulat nach einem der Ansprüche 1 bis 6, **dadurch gekennzeichnet, dass** das Mengenverhältnis von Bindemittel zu Schüttgut sich im Bereich von 1:5 bis 1:100 bewegt.

8. Verwendung eines Granulats nach einem der Ansprüche 1 bis 7 als Zusatzstoff in der Stahlherstellung und Feuerfest.

9. Verfahren zur Herstellung eines Granulats zur Verwendung als Zusatzstoff in der Stahlherstellung und Feuerfest enthaltend mindestens ein agglomeriertes reaktives Schüttgut sowie eine Bindemittelmatrix, wobei das Schüttgewicht im Bereich von 0,7 bis 1,2 liegt, wobei die Bindemittelmatrix aus mindestens einem organischen oder anorganischen Salz als Bindemittel besteht, wobei der Schmelzpunkt des Bindemittels im Bereich von 100°C bis 600°C liegt, wobei der Anteil an Schüttgut im Granulat im Bereich von 85 bis 99 % liegt
und wobei das reaktive Schüttgut gebrannter Kalk CaO, gebrannter Dolomit MgO•CaO oder gebrannter Magnesit MgO oder Mischungen dieser Stoffe oder Mischungen mit den jeweiligen Karbonaten ist,
umfassend folgende Schritte:
- Vermengen von reaktivem Schüttgut, Bindemittel sowie gegebenenfalls weiteren Hilfstoffen,
- Erhitzen des Gemenges auf eine Temperatur von mindestens der Schmelztemperatur des Bindemittels, so dass das Bindemittel zumindest teilweise schmilzt,
- Abkühlen des Gemenges unter Ausbildung des Granulats;
oder umfassend folgende Schritte:
- Erhitzen des Bindemittels auf eine Temperatur von mindestens der Schmelztemperatur des Bindemittels,
- Vermengen des zumindest teilweise geschmolzenem Bindemittel mit dem reaktivem Schüttgut, sowie gegebenenfalls weiteren Hilfstoffen,
- Abkühlen des Gemenges unter Ausbildung des Granulats.

## Claims

1. Granulate for use as an additive in steel production and refractory containing at least one agglomerated reactive bulk material and a binder matrix, wherein the bulk density lies in the range of 0.7 to 1.2, wherein the binder matrix consists of at least one organic or inorganic salt as a binder, wherein the melting point of the binder is in the range of 100°C to 600°C,
wherein the proportion of bulk material in the granulate is in the range of 85 to 99%
and wherein the reactive bulk material is burnt lime CaO, burnt dolomite MgO•CaO or burnt magnesite MgO or mixtures of these substances or mixtures with the respective carbonates,
which can be produced by a method comprising the following steps:
- mixing reactive bulk material, binder and, where appropriate, further auxiliary materials,
- heating the mixture to a temperature of at least the melting temperature of the binder, so that the binder at least partially melts,
- cooling the mixture to form the granulate;
or comprising the following steps:
- heating the binder to a temperature of at least the melting temperature of the binder,
- mixing the at least partially molten binder with the reactive bulk material and, where appropriate, further auxiliary materials,
- cooling the mixture to form the granulate.

2. Granulate according to claim 1, **characterized in that** the melting point of the binder is lower than the melting point of the reactive bulk material.

3. Granulate according to claim 1 to 2, **characterized in that** the binder contains sodium, calcium, boron, aluminum, iron, fluorine, nitrogen, carbon and/or oxygen, preferably in the form of chemical compounds.

4. Granulate according to any one of claims 1 to 3, **characterized in that** the bulk material has an average grain size of 0 to 100 µm and/or a d50 value of 40 to 60 µm.

5. Granulate according to any one of claims 1 to 4, **characterized in that** the granulate has a grain size of 1 to 6 mm or above.

6. Granulate according to any one of claims 1 to 5, **characterized in that** the proportion of binder in the granulate is in the range of 1 to 15%.

7. Granulate according to any one of claims 1 to 6, **characterized in that** the proportion of binder in the bulk material is in the range of 1:5 to 1:100.

8. Use of a granulate according to any one of claims 1 to 7 as an additive in steel production and refractory.

9. Method for the production of a granulate for use as an additive in steel production and refractory containing at least one agglomerated reactive bulk material and a binder matrix, wherein the bulk density is in the range of 0.7 to 1.2, wherein the binder matrix consists of at least one organic or inorganic salt as a binder, wherein the melting point of the binder is in the range of 100°C to 600°C, wherein the proportion of bulk material in the granulate is in the range of 85 to 99%
and wherein the reactive bulk material is burnt lime CaO, burnt dolomite MgO•CaO or burnt magnesite MgO or mixtures of these substances or mixtures with the respective carbonates,
comprising the following steps:
- mixing reactive bulk material, binder and, where appropriate, further auxiliary materials,
- heating the mixture to a temperature of at least the melting temperature of the binder, so that the binder at least partially melts,
- cooling the mixture to form the granulate;
or comprising the following steps:
- heating the binder to a temperature of at least the melting temperature of the binder,
- mixing the at least partially molten binder with the reactive bulk material and, where appropriate, further auxiliary materials,
- cooling the mixture to form the granulate.

## Revendications

1. Granulat destiné à être utilisé comme additif dans la fabrication d'acier et réfractaire, contenant au moins un produit en vrac réactif et aggloméré ainsi qu'une matrice de liant, dans lequel le poids du produit en vrac est compris dans la plage allant de 0,7 à 1,2, dans lequel la matrice de liant étant constituée d'au moins un sel organique ou inorganique comme liant, dans lequel le point de fusion du liant est compris dans la plage allant de 100 °C à 600 °C,
dans lequel la proportion de produit en vrac dans le granulat est comprise dans la plage allant de 85 à 99 %
et dans lequel le produit réactif en vrac est du calcaire calciné CaO, de la dolomite calcinée MgO•CaO ou de la magnésite calcinée MgO ou des mélanges de ces substances ou des mélanges avec les carbonates respectifs,
pouvant être fabriqué par un procédé comprenant les étapes suivantes :
- mélange de produit réactif en vrac, de liant et, éventuellement, d'autres substances auxiliaires,
- chauffage du mélange à une température au moins égale à la température de fusion du liant, de façon à ce que le liant fonde au moins partiellement,
- refroidissement du mélange, donnant lieu à la formation du granulat ;
ou comprenant les étapes suivantes :
- chauffage du liant à une température au moins égale à la température de fusion du liant,
- mélange du liant, fondu au moins partiellement avec le produit réactif en vrac et, éventuellement, d'autres substances auxiliaires,
- refroidissement du mélange, donnant lieu à la formation du granulat.

2. Granulat selon la revendication 1, **caractérisé en ce que** le point de fusion du liant est inférieur au point de fusion du produit réactif en vrac.

3. Granulat selon la revendication 1 ou 2, **caractérisé en ce que** le liant contient du sodium, du calcium, du bore, de l'aluminium, du fer, du fluor, de l'azote, du carbone et/ou de l'oxygène, de préférence sous forme de composés chimiques.

4. Granulat selon l'une quelconque des revendications 1 à 3, **caractérisé en ce que** le produit en vrac a une taille moyenne de grain de 0 à 100 µm et/ou une valeur d50 allant de 40 à 60 µm.

5. Granulat selon l'une quelconque des revendications 1 à 4, **caractérisé en ce que** le granulat a une taille de grain de 1 à 6 mm ou dépassant ces valeurs.

6. Granulat selon l'une quelconque des revendications 1 à 5, **caractérisé en ce que** la part de liant dans le granulat est dans la plage de 1 à 15 %.

7. Granulat selon l'une quelconque des revendications 1 à 6, **caractérisé en ce que** le rapport quantitatif du liant au produit en vrac est dans la plage de 1:5 à 1:100.

8. Utilisation d'un granulat selon l'une quelconque des revendications 1 à 7 comme additif dans la fabrication d'acier et réfractaire.

9. Procédé de fabrication d'un granulat destiné à être utilisé comme additif dans la fabrication d'acier et réfractaire, contenant au moins un produit en vrac réactif et aggloméré ainsi qu'une matrice de liant, dans lequel le poids du produit en vrac est compris dans la plage allant de 0,7 à 1,2, dans lequel la matrice de liant étant constituée d'au moins un sel organique ou inorganique comme liant, dans lequel le point de fusion du liant est compris dans la plage allant de 100 °C à 600 °C, dans lequel la proportion de produit en vrac dans le granulat est comprise dans la plage allant de 85 à 99 %
et dans lequel le produit réactif en vrac est du calcaire calciné CaO, de la dolomite calcinée MgO•CaO ou de la magnésite calcinée MgO ou des mélanges de ces substances ou des mélanges avec les carbonates respectifs,
comprenant les étapes suivantes :
- mélange de produit réactif en vrac, de liant et, éventuellement, d'autres substances auxiliaires,
- chauffage du mélange à une température au moins égale à la température de fusion du liant, de façon à ce que le liant fonde au moins partiellement,
- refroidissement du mélange, donnant lieu à la formation du granulat ;
ou comprenant les étapes suivantes :
- chauffage du liant à une température au moins égale à la température de fusion du liant,
- mélange du liant, fondu au moins partiellement avec le produit réactif en vrac et, éventuellement, d'autres substances auxiliaires,
- refroidissement du mélange, donnant lieu à la formation du granulat.
